Europäisches Patentamt

European Patent Office

Office européen des brevets

(19)

(11) EP 0 399 723 B1

(12) EUROPEAN PATENT SPECIFICATION

(45) Date of publication and mention
of the grant of the patent:
**11.09.1996 Bulletin 1996/37**

(51) Int Cl.⁶: **H04Q 11/04**, H04Q 3/545

(21) Application number: **90305269.4**

(22) Date of filing: **16.05.1990**

(54) **Improvement in switching system reliability**

Betriebssicherheitsverbesserung in Vermittlungssystemen

Sécurité dans des systèmes de commutation

(84) Designated Contracting States:
**DE ES FR GB IT NL**

(30) Priority: **24.05.1989 US 356807**
**24.05.1989 US 356802**
**24.05.1989 US 356823**

(43) Date of publication of application:
**28.11.1990 Bulletin 1990/48**

(73) Proprietor: **AT&T Corp.**
**New York, NY 10013-2412 (US)**

(72) Inventors:
• **Ardon, Menachem Tsur**
**Naperville, Illinois 60540 (US)**
• **Cline, William Keith**
**Naperville, Illinois 60540 (US)**
• **Janowiak, Michele Margaret**
**Woodridge, Illinois 60517 (US)**
• **Nathan, Ram**
**Aurora, Illinois 60505 (US)**

(74) Representative: **Johnston, Kenneth Graham et al**
**Lucent Technologies (UK) Ltd,**
**5 Mornington Road**
**Woodford Green Essex, IG8 0TU (GB)**

(56) References cited:
**DE-A- 3 609 889**         **US-A- 4 602 363**

• **IEEE GLOBAL TELECOMMUNICATIONS
CONFERENCE & EXHIBITION - PAPER 37.4, vol.
3, November 1988, HOLLYWOOD (US) pages
1211 - 1220, N. SKAPERDA 'The Ewsd today,
Plans for tomorrow'**
• **INTERNATIONAL SWITCHING SYMPOSIUM -
PAPER B1.1 vol. 1, March 1987, PHOENIX (US)
pages 26 - 33, ANDERSON ET AL 'Distributed
Systems Tradeoffs'**
• **A.T. & T. TECHNICAL JOURNAL vol. 64, no. 6,
July 1985, NEW YORK (US) pages 1339 - 1356
CARNEY ET AL 'The 5ESS Switching System:
Architectural Overview'**

Description

Technical Field

This invention relates to the communication of customer information in a telecommunication switching system and particularly to arrangements for connecting portions of the switching system via trunks when a central stage switch arrangement is unavailable for connections.

Background of the Invention

Local switching systems process originating and terminating calls between customer lines connected to the switching system and trunks to other switching systems. Since most customer lines are connected only to a single local switching system, the availability of telecommunication service to a customer is dependent upon the continued operability of the local switching system.

Such systems are designed and constructed to provide continuing reliable service in the presence of faults. The reliability is sometimes achieved by providing identical duplicates of equipment in the more critical parts of the system. When a failing part is detected, the duplicate is placed in service and the failing part is removed. With care, the substitution of duplicate for failing parts can occur without the loss of service to customers.

A distributed switching system is one comprised of a plurality of switch units which interface customer lines and trunks on a peripheral side of the unit and which interface a central switch arrangement on the other side of the unit. Calls between customers and/or trunks connected to different switch units are completed through the central switch. A duplicated distributed switching system comprises a plurality of duplicated switching units which are switchably connected by a duplicated pair of central switches. In the presence of faults, a duplicate switching unit is substituted for a failing one and a duplicate central switch is substituted when a central switch fails. This arrangement provides excellent service for systems which undergo normal failures in only one unit of the duplicated pairs.

A disaster, such as a fire in a switching office, may cause catastrophic failures which are not normal and result in the loss of both units of a duplicated pair. With no duplicate to substitute for a failing unit the system may not be able to complete calls. For example, the failure of both units of the central switch will isolate the customers connected to one switch unit from the lines and trunks connected to all of the other switch units of the system. Not only is it impossible to reach a large number of the customers on the same switching system, a customer's access to other switching systems normally reached via trunks at other switching units is also lost. Such isolation of customers is a substantial service limitation which is compounded by the fact that damage repair after a disaster may take an extended period of time.

Although the subscriber isolation problem is raised in the context of disaster which destroys the central switch, the substantial isolation of customers can occur in less catastrophic ways. The switch units of a distributed switching system are connected to the central switch by communication links. The complete failure of the communication links between a switch unit and the central switch can isolate the customers of the switching unit served by those links as much as the complete central switch failure.

A need therefore exists in the art for arrangements which avoid customer isolation by providing switching unit-to-switching unit connections when the central switching arrangement of a distributed switching system, which normally connects switching units, is unavailable for connections from one switch unit to another.

IEEE Global Telecommunications Conference and Exhibition, vol. 3, November 1988 pages 1211 to 1220, (D1) and particularly page 1216 lines 13 to 20 discusses when the central connector (SN) is unavailable, the switch units (DLUs) convert to the standalone operation. In this mode, each unit operates independently. In essence, each acts like a separate switch; there is no longer common control between the units within the community. As D1 points out, the separate operating units cannot communicate with each other. To solve that problem, FIG. 5 of D1 shows a restructuring of the separate units (DLU0 through DLU5) into a cluster which is configured as a new collective entity. The "cluster" unit's control is transferred from the group processor (GP) to the specially designed standalone service controller (SASC) which "[takes] over from the GP [unit controller] ... the call handling control (Reference D1, page 1216, lines 30-31).

According to the present invention, there is provided a system as defined in claim 1.

This need is met in accordance with the invention in which inter-switch unit trunks interconnect the switch units of a distributed switching system and when the central switch, which normally advances connections between switching units is unavailable, connections between switching units are advanced by control units of the switch units over the inter-switch unit trunks. The use of inter-switch unit trunks as the alternative to the central switch avoids subscriber isolation during a catastrophe such as a major central office fire.

Advantageously, when an inter-switch unit trunk is used to advance connections it is also used to convey the switch unit-to-switch unit signaling needed to coordinate the establishment of the alternative path. Such signaling includes the information defining a call destination. A switch unit receiving information at a line or trunk defining a call destination at another switch unit forwards the signaling information to the switch unit of the call destination over a selected inter-switch unit trunk to advance the call. The switch unit receiving the original call signaling information connects the line or trunk on which the signaling is received to the inter-switch unit trunk and the destination switch unit, in response to the inter-switch unit trunk signaling, connects the call destination to the inter-switch unit trunk.

When more than two switch units are used to construct the distributed switching system, the number of inter-switch unit trunks required to provide alternative paths can be reduced when a switch unit is used to selectively interconnect inter-switch unit trunks. In an illustrative embodiment, an alternative path is established between a first and second switch unit via two inter-switch unit trunks serially connected by an intervening third switch unit. The first switch unit selects a first inter-switch unit trunk to the intervening switch unit and transmits signaling information thereto. The intervening switch unit selects a second inter-switch unit trunk, in response to the signaling information, and advances the connection to the second (destination) switch unit over the second inter-switch unit trunk. The intervening switch unit then completes a connection between the first inter-switch unit trunk and the second inter-switch unit trunk to interconnect the first and second switch units.

A method for providing alternative paths between the switch units of a distributed switching system is also described in the embodiments. For example, a first switch unit receives call signaling information defining a call destination appearance and makes a determination, based on previously stored status information, that central connection arrangement is unavailable for the connection. The first switch unit identifies, from the call signaling information, a first inter-switch unit trunk to a second switch unit and then call signaling information identifying the call destination is transmitted on the first inter-switch unit trunk to the second switch unit. The latter identifies the call destination from the received signaling information and completes connection between the destination appearance and the inter-switch unit trunk. Alternatively, the second switch unit identifies, from the call signaling information on the first switch unit trunk, a second inter-switch unit trunk to a third switch unit. Signaling information is then transmitted on the second inter-switch unit trunk to advance the connection.

The switch units each comprise a control unit which cooperates with a central controller associated with the central switch to determine the availability of the central switch for advancing connections. A control unit which fails to receive messages from the central control for a predetermined period of time recognizes central switch unavailability and stores central switch unavailability status information in an associated memory. The control unit uses the stored status information to determine when inter-switch unit trunks are to be used to advance connections.

Embodiments are also described which reduce the burden of continuously serving the interoffice trunks which will be seldom used. In a first such embodiment, an interoffice trunk comprises a first and a second trunk to a second telecommunications office, such as a toll office. The first and second trunks are normally used in conjunction with a toll office to provide toll telephone service. However, when interoffice trunks are needed, such as when the central connection arrangement fails, the toll office connects the first and second trunks which are then used to provide inter-switch unit paths.

In an additional embodiment which also reduces the burden of providing alternative paths between switch units, inter-switch unit trunks are connected between the switch units, but no trunk services are normally given to them. When the central connection arrangement is determined to be unavailable for providing connections between the switch units the switch units begin to provide trunk services to the normally unserved interoffice trunks and use them to advance connections between the different switch units.

## Brief Description of the Drawing

FIG. 1 is a block diagram of a telecommunication switching system;
FIG. 2 in a block diagram of a time-slot interchange unit employed in FIG.1;
FIG. 3 represents a digital data word;
FIGS. 4 through 6 represent arrangements for interconnecting switch modules with inter-switch module trunks;
FIG. 7 is a flow diagram of a call completion process;
FIG. 8 is a block diagram of an embodiment of the invention;
FIG. 9 represents an arrangement for interconnecting switch units with inter-switch unit trunks;
FIG. 10 and 11 are flow diagram of processes of connecting inter-switch unit trunks to a trunk serving arrangement; and
FIG. 12 is a flow diagram of a call completion process.

## Detailed Description

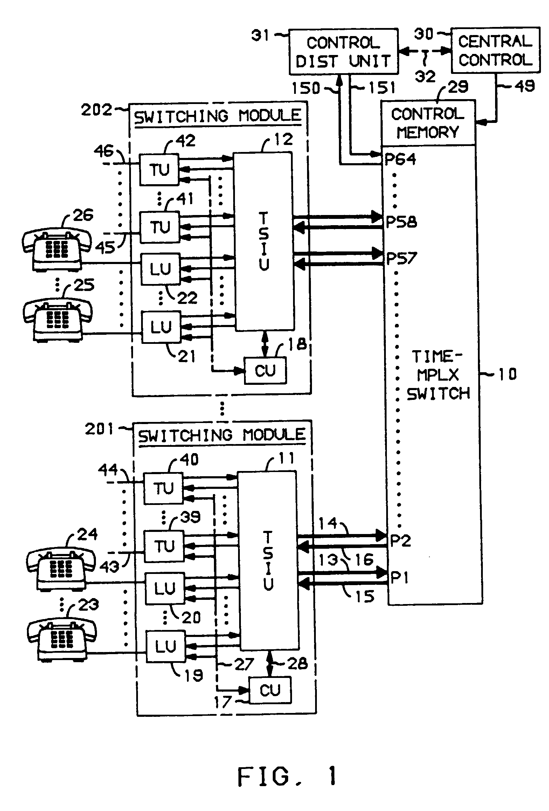

The time-division switching system of FIG. 1 is used to interconnect subscriber sets such as subscriber sets 23 through 26 and trunks such as trunks 43 through 46 and includes a time-multiplexed switch 10 comprising a time-shared space division switch having 64 input terminals and 64 output terminals. Also included is a plurality of time-slot interchange units of which representative time-slot interchange units 11 and 12 are specifically shown. Each time-slot interchange unit 11 and 12 includes a bidirectional time-slot interchanger and is connected to two input terminals and two output terminals of time-multiplexed switch 10. In FIG. 1 time-slot interchange unit 11 is connected to two time-multiplexed switch input terminals via time-multiplexed lines 13 and 14 and to two output terminals, via time-multiplexed lines 15 and 16.

In the description which follows, the input and output terminals of time-multiplexed switch 10 are referred to as inputoutput terminal pairs. This term is used since the source for data words to an input terminal of a given inputoutput terminal pair is also the destination for data words from the output terminal of that pair. As shown in FIG. 1, input/output terminal pair P1 is associated with time-multiplexed lines 13 and 15. Each time-multiplexed line 13 through 16 conveys digital information in 125 microsecond frames each comprising 256 time separated channels. Accordingly, each time-slot interchange unit transmits and receives up to 512 channels of digital information during each 125 microsecond frame.

Each time-slot interchange unit is uniquely associated with a control unit of which control unit 17 is associated with time-slot interchange unit 11, and control unit 18 is associated with time-slot interchange unit 12. Additionally, each time-slot interchange unit is connected via individual time-multiplexed lines to a plurality of peripheral units of which line units 19 through 22 and trunk units 39 through 42 are shown in FIG. 1. A time-slot interchange unit, its associated control unit and peripheral units are collectively referred to herein as a switching module which is represented in FIG. 1 as switching modules 201 and 202. Line units 19 and 20 and trunk units 39 and 40 are connected to time-slot interchange unit 11 of switching module 201 and line units 21 and 22 and trunks units 41 and 42 are connected to time-slot interchange unit 12 of switching module 202. Each of the line units is connected to a number of subscriber sets of which subscriber sets 23 through 26 are shown. The exact number of line units associated with each time-slot interchange unit and the exact number of subscriber sets associated with each line unit is determined by the number of subscribers to be served and the calling rates of those subscribers. Each line unit terminates the analog loop of the well-known type from a plurality of subscriber sets, e.g., 23 through 26, and converts call information including analog speech signals into digital data words which are transmitted to its associated time-slot interchange unit. Further, each line unit detects service requests from the subscriber sets and generates certain signaling information for those subscriber sets. The particular subscriber sets from which speech samples are taken and encoded, and the particular time-multiplexed channels used to transmit the resulting code between the line unit and its associated time-slot interchange unit are determined by the control unit of the associated time-slot interchange unit.

The trunk units, e.g. 39 and 40, perform analogous functions for trunks such as detecting trunk seizures and sending and receiving trunk signaling to and from other systems. The trunks can be either of the analog or digital type. One example of a digital trunk is the T1 carrier system disclosed in the J. H. Green et. al., U. S. Patent No. 4,059,731, on which 24 separate communication channels are multiplexed.

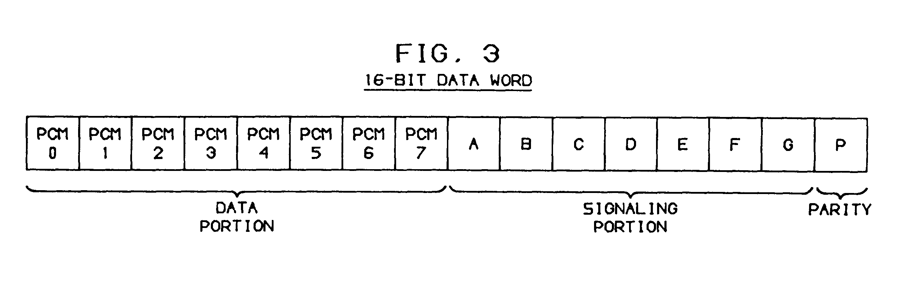

The relationship of subscriber sets, line/trunk units and time-slot interchange units is substantially the same for each of such groups of interconnected inputs. Accordingly, while the description which follows relates directly to subscriber set 23, line unit 19 and time-slot interchange unit 11 (switching module 201), it shows the relationships for all other groups of such units. Furthermore, an analogous relationship exits between trunks, trunk units and time-slot interchange units. Line unit 19 scans the lines connected to each subscriber set to detect requests for service. When such a request is detected, line unit 19 transmits to control unit 17, a message indicating the request and the identity of the requesting subscriber set. This message is transmitted to control unit 17 via a communication path 27. Control unit 17 performs the necessary translation based on the service requested, the identity of the requesting subscriber set and the available equipment, and transmits a message to line unit 19 via communication path 27 defining which of the plurality of time separated channels between line unit 19 and time-slot interchange unit 11 is to be used to transmit information from subscriber set 23 to time-slot interchange unit 11. Based on this message, line unit 19 encodes the analog information from subscriber set 23 into digital data words and transmits the resulting data words in the assigned channels. FIG. 3 represents the digital data word format used in the present system which format includes an 8-bit data portion and a 7-bit signaling portion. Line unit 19 also transmits in the signaling bit position labeled A (the A-bit) of the assigned channel an indication of the DC state, i.e., open circuitclosed circuit of the subscriber loop associated with subscriber set 23.

After a time separated channel between line unit 19 and time-slot interchange unit 11 is assigned to a given subscriber set, control unit 17 detects signaling information from the subscriber set by sampling the information transmitted in the assigned channel. Such sampling operations are performed via a communication path 28. Control unit 17 responds to the signaling information from the subscriber's channel, and to control messages from other control units, e.g., 18, and a central control unit 30, by controlling the time-slot interchange function of the time-slot interchange unit 11.

The trunks, e.g., 43 and 44 are assigned a time-separated channel to the time-slot interchange unit at system initialization and do not require the assignment of a channel when trunk activity begins (origination). The trunk units, e.g., 39 and 40 of the embodiment detect trunk signaling such as trunk seizure and reflect this signaling in the A-bit of the pre-assigned channel. Inband signaling, such as MF tones, is conveyed to the time-slot interchange unit via the PCM data portion of the assigned channel. Control unit 17 detects trunk signaling via the communication path 28 in the same manner that subscriber signaling is detected.

As previously stated, each time-multiplexed line between a time-slot interchange unit and the time-multiplexed switch 10 has 256 channels each 125 microsecond frame. These channels are assigned numerical designations from 1 to 256 in sequence as they occur. This sequence of channels recurs so that a given channel will be available every 125 microseconds. The time-slot interchange function takes the data words received from the line and trunk units and places them in channels on the time-multiplexed line between the time-slot interchange units and the time-multiplexed switch 10 under the control of control units 17 and 18.

Time-multiplexed switch 10 operates in recurring frames of time-slots where each 125 microsecond frame comprises 256 time-slots. During each time-slot, time-multiplexed switch 10 is capable of connecting data words received at any of its 64 input terminals to any of its 64 output terminals in accordance with time-slot control information stored in a control memory 29. The configuration pattern of connections through time-multiplexed switch 10 repeats itself every 256 time-slots and each time-slot is assigned a numerical designation in sequence from 1 to 256. Accordingly, during a first time-slot TS 1 the information in a channel (1) on time-multiplexed line 13 may be switched by time-multiplexed switch 10 to an output terminal P64 while during the next time-slot TS 2 the next channel (2) on time-multiplexed line 13 may be switched to an output terminal P57. Time-slot control information is written into control memory 29 by central control 30 which generates this control information from control messages obtained from various control units, e.g., 17 and 18.

Central control 30 and control units 17 and 18 exchange control messages utilizing selected channels called control channels of the time-multiplexed lines, e. g., 13 through 16\ between the time-slot interchange units and the time-multiplexed switch 10. Each control message comprises a plurality of control words and each control channel can transmit one control word per frame of 256 time separated channels. The same channel of the two time-multiplexed lines associated with a given inputoutput terminal pair is predefined to be a control channel. Additionally, a given channel is used as a control channel for only one pair of time-multiplexed lines. For example, if channel 1 is used as a control channel on time-multiplexed line 13 and the associated time-multiplexed line 15, no other time-multiplexed line will use channel 1 as a control channel. During each time-slot having the same numerical designation as a control channel, time-multiplexed switch 10 connects the data word occupying that control channel to output terminal P64 and connects input terminal P64 to the output terminal associated with the above-mentioned control channel.

The following is an example of the embodiment when channel 1 is the control channel for time-multiplexed lines 13 and 15, and channel 2 is the control channel for time-multiplexed lines 14 and 16. During time-slot TS 1 information from control memory 29 defines, among other connections, that the control word in channel 1 of time-multiplexed line 13 is connected to output terminal P64 and that the control word in channel 1 at input terminal P64 is connected to time-multiplexed line 15. Similarly, during time-slot TS 2, information from control memory 29 defines that the control word in channel 2 of time-multiplexed line 14 is connected to output terminal P64 and that the control word in channel 2 at input terminal P64 is connected to time-multiplexed line 16. When operating in this manner, output terminal P64 receives from time-multiplexed switch 10 all control words in a channel having the same numerical designation in which they were transmitted to the time-multiplexed switch. Further, each control channel is connected to receive control words from input terminal P64 during the time-slot having the same numerical designation as their associated control channel. Control words switched to output terminal P64 are transmitted to a control distribution unit 31 which temporarily stores them in a location associated with that control channel. The association of control channels with storage locations in control distribution unit 31 identifies the source of the information stored.

Each control message from a time-slot interchange unit comprises a destination portion and a signaling information portion. The destination portion uniquely defines the expected destination of the signaling portion of the control message. Control distribution unit 31 interprets the destination portion of each control message to deternmie the proper destination for the control message and retransmits the message to input terminal P64 of time-multiplexed switch 10 in a channel having the same numerical designation as the control channel associated with the destination unit.

When operating as above described, time-slot interchange unit 11 transmits control messages to time-slot interchange unit 12 by transmitting control words during its recurring control channel to form a control message having a destination portion identifying time-slot interchange unit 12. Control distribution unit 31 accumulates the control words, interprets the destination portion, and retransmits the message to input terminal P64 during the channel having the same numerical designation as the control channel associated with time-slot interchange unit 12.

A control message can also be transmitted to central control 30 by defining central control 30 in the destination portion of the control message. When this occurs, control distribution unit 31 transmits the message to central control 30 via a communication link 32 rather than returning it to time-multiplexed switch 10. Similarly, a message may be transmitted from central control 30 to one of the time-slot interchange units by transmitting to the control distribution unit 31 a control message having a destination portion defining the particular time-slot interchange unit. This transmission is also accomplished utilizing communication link 32. The operation of the system shown in FIG. 1 is described in detail in the above-cited Beuscher et. al. U. 5. Patent No.

4,322,843.

The control messages exchanged among control units, e.g., 17 and 18 and the central control 30 are used to advance call completion and to determine the status of the switching system and its parts. Normal call processing involves the receipt of call signaling information from an appearance, e.g., line unit 19 at one switch module, the transmission of a control message from the receiving switch module to central control 30 defining the incoming call and the transmission of control messages to the receiving and call destination switch modules defining the path through the time-multiplex switch 10 to be used for call completion. The involved switching modules then connect the appropriate lines or trunks to the defined time-multiplex switch 10 path. The exchange of call completion control messages coordinates the operation the involved switching modules and the central control 30 and relies on a decision by the central control for the time-multiplex switch 10 path to be used.

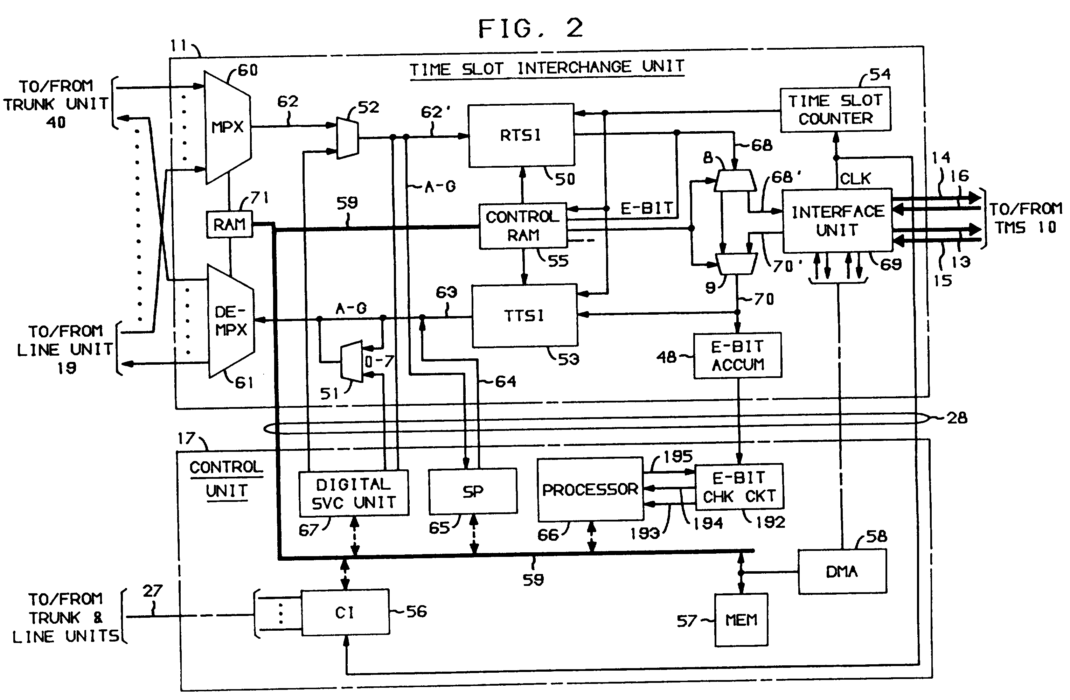

Due to the interactive nature of normal call completion knowledge of the status of the control units and the central control 30 is important to each control unit. Each control unit, e.g., 17 and 18 periodically transmits a communication check control message to the central control 30 which replies with a predictable response message to the source control unit. When a control unit does not receive appropriate response messages from central control 30 it assumes a failure of the central control or the time-multiplex switch communication link thereto and changes its status to the stand alone mode. In the stand alone mode, a control unit reacts to input stimuli without assistance from the central control 30 and without paths though the time-multiplex switch 10. Each control unit comprises a memory 57 (FIG. 2) which includes a location that is marked to indicate stand alone status of that control unit.

Central control 30 expects communication check messages from each control unit, e.g., 17 at a predetermined periodic rate. Central control 30 detects when such messages are not properly received, marks the delinquent control unit as unavailable in the central control memory (not shown) and transmits unavailability control messages to the remaining control units. The control units respond to the unavailability notice from central control 30 by marking the unavailable control unit as in the stand by mode in their individual control unit memory 57 (FIG. 2).

Memory 57 (FIG. 2) of each control unit stores the program for the control of its associated control unit and data regarding the function of the control unit, its associated time-slot interchange unit and its associated subscribers and trunks. The data stored in memory 57 includes translation tables for translating calling information into information identifying the routing for calls and information defining the status of all switching modules, e.g., 201 and 202. The main processing entity of control unit 17 is a processor 66 which operates in response to instructions and data stored in memory 57. Control unit 17 includes a control interface circuit 56 which receives instructions from processor 66 via a bus 59 and in response thereto, communicates with the peripheral units, e.g., line units 19 and 20 and trunk units 39 and 40, via communication path 27. A DMA unit 58 is also included in control unit 17 and is used in conjunction with an interface unit 69 to transmit and receive the control messages on time-multiplexed lines 13 through 16 to and from the time-multiplex switch 10.

Each of the line and trunk units transmits recurring frames of information each comprising 32 channels of 16 bits each. This information is transmitted to a multiplex unit 60 (FIG. 2) within time-slot interchange unit 11. Multiplex unit 60 receives the output signals from the peripheral units which signals are selectively transmitted on an output time-multiplexed line 62 having 512 channels for each 125 microsecond frame. The connection of peripheral unit channels to the channels of time-multiplex line 62 by multiplex unit 60 is controlled by information stored in a control RAM 71 which is cyclically accessed at the time-multiplexed line 62 rate. Control information is written into control RAM 71 by processor 66 at the time of system initialization so that processor 66 is aware of the particular peripheral unit channel occupying each channel on time-multiplex line 62. Similarly, a demultiplex circuit 61 receives 512 channels of 16 bits each on a time-multiplexed line 63 which channels are distributed, in a manner determined by information stored in control RAM 71, to the peripheral unit channels connected to the line and trunk units, e.g., 19 and 40.

The information transmitted in a given channel on time-multiplexed line 62 is conveyed by a gate 52 and a path 62′ to a receive time-slot interchanger 50 where it is stored in a memory location uniquely associated with that given channel. The particular memory location of receive time-slot interchange 50 into which a given data word is stored is defined by time-slot designation signals generated by time-slot counter 54. Time-slot counter 54 generates a recurring sequence of 512 time-slot designations at the rate of one time-slot designation per time-slot. The particular time-slot designation generated during the time-slot in which a given data word is received defines the memory location within receive time-slot interchanger 50 which is to store that data word.

Data words are also read from receive time-slot interchanger 50 at the rate of one data word per time-slot The memory address of the data word to be read from receive time-slot interchanger 50 during a given time-slot is obtained by reading control RAM 55. Control RAM 55 is read once per time-slot at an address defined by the time-slot designation from time-slot counter 54 and the quantity so read is transmitted to receive time-slot interchanger 50 as the read address for that time-slot. Data words read from receive time-slot interchanger 50 are transmitted to time-multiplexed switch 10 via a time-multiplexed line 68, a gate 8, a time-multiplexed line 68′ and an interface unit 69. Data words from time-multiplexed switch 10 are received by time-slot interchange unit 11 by interface unit 69, and are conveyed via a time-multiplexed line 70′, a gate 9 and a time-multiplexed line 70 to transmit time-slot interchanger 53. For calls among the line and trunk units connected to time-slot interchange unit 11, control RAM 55 effects the operation of gates 8 and 9 such that data words transmitted by receive time-slot interchanger 50 on time-multiplexed line 68 are conveyed via gates 8 and 9 and time-multiplexed line 70 to transmit time-slot interchanger 53.

Transmit time-slot interchanger 53 stores the incoming data words in a location defined by an address from control RAM 55. Data words are read from transmit time-slot interchanger 53 at the address defined by the time-slot counter 54. Data words so read are transmitted on time-multiplexed line 63 for transmission to the peripheral units, e.g., line unit 19. It should be noted that control RAM 55 may be implemented as a number of control memories, each associated with a particular circuit, e.g., transmit time-slot interchanger 53. The particular configuration of control memories is not important to the present description and may vary depending on timing and circuitry requirements within the time-slot interchange unit 11. The general principles of time-slot interchange as performed by the receive time-slot interchanger 50, the control RAM 55, the time-slot counter 54 and the transmit time-slot interchanger 53 are well known in the art and not described in greater detail herein. One arrangement for reading and writing data words in time-slot memories is described in detail in U. 5. Patent No. 4,035,584, J. W. Lurtz.

Line and trunk scanning and signaling (called line and trunk services) are provided by the control unit 17 which includes a signal processor 65 and a digital service unit 67. Signal processor 65 reduces the real time load requirement of processor 66 by receiving and analyzing the signaling portion (bits A through G, FIG. 3) of each data word received on line 62′ from line and trunk units and by transmitting signaling bits to the line and trunk units. Processor 66 reads the status of the each incoming channel on time-multiplex line 62 from signal processor 65. This status, as attributed by processor 66 to the line or trunk connected to a channel, shows line or trunk status for call processing purposes. Signal processor 65 also transmits signaling information. Signaling bits are passed from the processor 66 to signal processor 65 with indications of their destination channel on time-multiplex line 63. Signal processor 65 then controls the signaling bits A through G of the destination channels via the path 64 to transmit signaling information to the line and trunk units.

Digital service unit 67 receives the PCM data portion of each data word received by line 62′ from the line and trunk units to detect PCM tone signals from subscribers and trunks. The processor 66 periodically reads the received signaling information from the digital services unit 67 to detect line and trunk signaling. Digital service unit 67 is also used to transmit tones and signals in PCM format via a gate 51 to subscribers and trunks and via a gate 52 to time-multiplex switch 10. Definitions of the tones and signals are sent from processor 66 to digital service unit 67 which places signals in appropriate channels.

The primary mode of control information exchange comprises the transmission of control messages from a source time-slot interchange unit through the time-multiplexed switch 10 and the control distribution unit 31 and back to the destination time-slot interchange unit. A secondary mode of communication is also used whereby control information with regard to a given call is transmitted from the source time-slot interchange unit to the destination time-slot interchanger unit via the time-multiplexed switch 10 utilizing the time-slot assigned for that call. The E-bit position of the data word in an active call time-slot is used for the secondary mode communication. However, it can be seen that any or all of the signaling bits could be used in this secondary communication mode. The E-bit serves the dual purpose of signal acknowledgement during the establishment of a path through the time-multiplexed switch 10 and continuing path continuity check during the connection. The operation of E-bit accumulator 48 and E-bit check circuit 192, which communicates with processor 66 via conductors 193,194, and 195 in performing these dual purposes is described in detail in the above-cited Beuscher, et. al., U. S. Patent No. 4,322,843.

In the system described above, with regard to FIGS. 1 through 3, a switching module collects signaling information from subscriber sets, e.g., 23 and/or trunks, e.g. 44 and in cooperation with the central control 30 and other switching modules completes communication paths to the other subscriber sets and trunks. When the call signaling information received by one switching module defines a subscriber set or trunk connected to another switching module, a path through the time-multiplex switch 10 is located and established by the central control 30 to compete the connection. When received call signaling information defines a line or trunk on the same switching module a communication path is completed within the switching module via gates 8 and 9 (FIG. 2).

The above-described system provides telecommunication services among peripheral units (lines and trunks) connected to the same switching module and provides service among peripheral units on different switch modules via connections through time-multiplex switch 10. Should a switch module lose contact with the time-multiplex switch 10 by a failure of its time-multiplexed links, e.g., 13 through 16, a time-multiplex switch 10 failure, a control distribution unit 31 failure or a central control 30 failure, connection can be provided only among the lines and trunks connected to the same switch module. In some situations this limited service is acceptable, but in most situations the inability to connect lines and trunks on different switch modules is a severe service limitation.

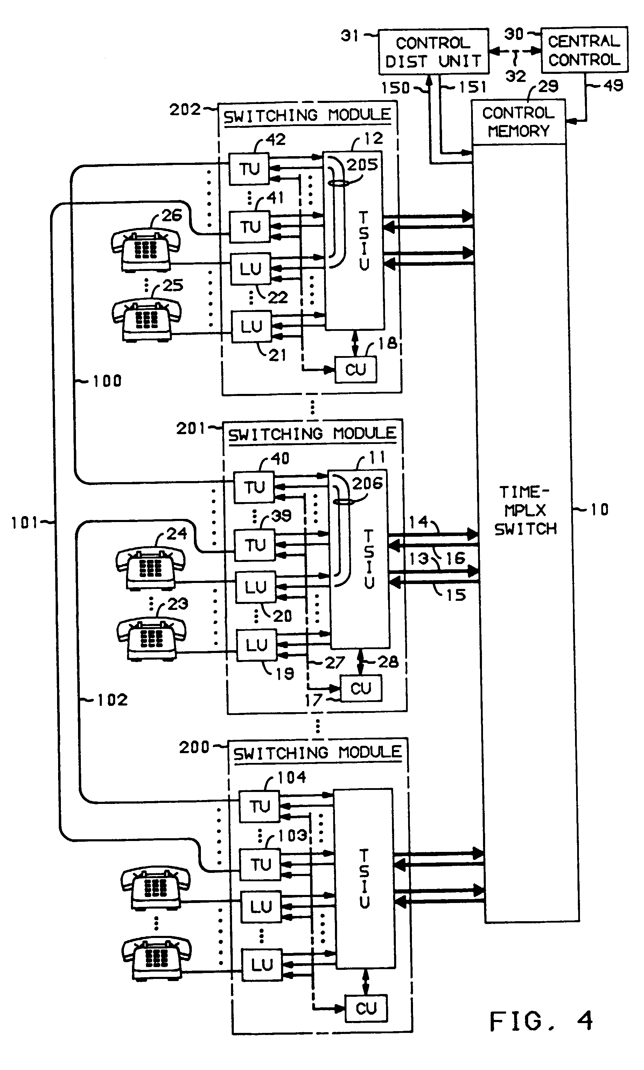

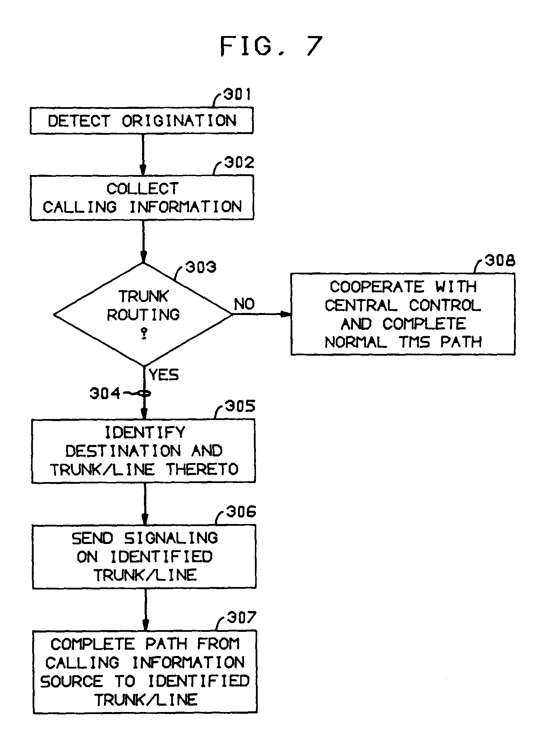

FIGS. 4 through 6 represent improved systems and new methods of operation which advantageously use trunks connected to the peripheral side of switch units to provide alternative paths between switching modules when the normal paths through time-multiplex switch 10 are unavailable. FIG. 7 represents a new call processing routine which is performed to take advantage of the arrangements of FIGS. 4 through 6.

FIG. 4 represents a time division switching system of the type disclosed in FIG. 1 and components having the same reference numeral as like components in FIG. 1 are the same. The system shown in FIG. 4 comprises three representative switch modules 200 through 202. These switch modules are interconnected by bi-directional inter-switching module trunks 100, and 101 and 102. Trunk 100 connects trunk unit 42 of switch module 202 to trunk unit 40 of switch module 201, trunk 101 connects trunk unit 41 of switch module 202 to trunk unit 103 of switch module 200 and trunk 102 connects trunk unit 39 of switch module 201 to trunk unit 104 of switch module 200.

As previously discussed, each switching module stores in its memory 57 an indication of its status and that of all other switch modules regarding stand alone operation. A given switching module uses inter-switching module trunks, e.g. 100 through 102 for routing when it is in the stand alone mode or when it has been notified by the central control 30 that the destination switching module for an incoming call is in the stand alone mode. For the following example, it is assumed that time-multiplex switch 10 has failed and is incapable of providing inter-switching module connections. The failure of the control message communication link provided by time-multiplex switch 10 is detected by the switching modules 200 through 202, which begin the stand alone mode of operation. In the stand alone mode, the switching module control units, e.g., 18 no longer send messages to other control units or the central control 30 and take on the responsibility for seeking the destination for each call received at the switching module. In furtherance of this model of operation, each control unit, e.g. 18 maintains a translation table which identifies the switching module associated with each subscriber set directory number of the switching system and the identities of one or more inter-switching module trunks to be used to connect to other subscriber sets.

In the description of FIGS. 1 through 3 a normal call processing routine for fining connections between switching modules through the time-multiplex switch 10 was followed. When no time multiplex switch connection was available, a requested call between switching modules would fail. FIG. 7 is a flow diagram representing a new call processing routine which is employed to connect switching modules via trunks connected among the peripheral trunk units of the switching modules. The switching system of FIG. 4 operates in accordance with the call processing routine of FIG. 7 which is described in terms of an exemplary call from subscriber set 26 of switching module 202 to subscriber set 24 of switching module 201.

Control unit 18 (block 301, FIG. 7), by means described with regard to FIGS. 1 through 3, detects when subscriber set 26 goes off-hook and begins to collect the dialed digits. In accordance with the present example, the dialed digits define subscriber set 24 of switch module 201. When all digits are collected (block 302) the call processing routine proceeds to block 303 where the switching module status is checked and a decision is made to use either the normal time-multiplex switch 10 routing or the alternative inter-switch module trunk routing. The status information stored in memory 57 (FIG. 2) is read to make this decision. When, as in the present example, a switch module is in the stand alone mode, normal pathing through the time-multiplex switch 10 is not available and the routing process continues from block 303 via path 304 to block 305. In block 305 the control unit 18 consults its translation table in memory 57 (FIG. 2) and determines that trunk 100 is available to switching module 201 which is connected to the dialed subscriber set 24. Accordingly, control unit 18 seizes trunk 100 and proceeds to send a representation of the dialed digits on trunk 100 in response to the appropriate acknowledgement signals from switching module 201 (block 306). Switching module 202 finally completes path 205 between subscriber set 26 and trunk 100 (block 307).

With some overlap of operation with switch module 202, switch module 201 starts a call processing program as shown in FIG. 7 in response to the seizure of inter-switch module trunk 100 by switching module 202. Switching module 201 completes the origination with an acknowledgement signal (block 301) and collects the digits from trunk 100 in block 302. The call processing routine in switching module 201 proceeds through block 303 to block 305 where control unit 17 consults its translation table using the digits received from trunk 100 and determines that they represent subscriber set 24. Switching module 201 then signals subscriber set 24 (block 306) and completes the path 206 between line unit 20 and trunk unit 40 (block 307) upon answer at subscriber set 24. Subscriber set 24 is then connected to subscriber set 26 via the path provided by path 205 through time slot interchange unit 12, the trunk 100 and the path 206 through time-slot interchange unit 11. This path is an alternative to the unavailable (in the present example) path through time-multiplex switch 10 which would have been established in block 308 (FIG. 7) had trunk routing not been selected in block 303.

For complete connectability, the arrangement shown in FIG. 4 includes at least one trunk between each pair of switch modules. This results in $\frac{N(N-1)}{2}$ interconnecting trunks, where N represents the number of switching modules. As the number of switching modules increases, the number of interconnecting trunks becomes so large that a completely interconnected system of the type shown in FIG. 4 may not be desirable.

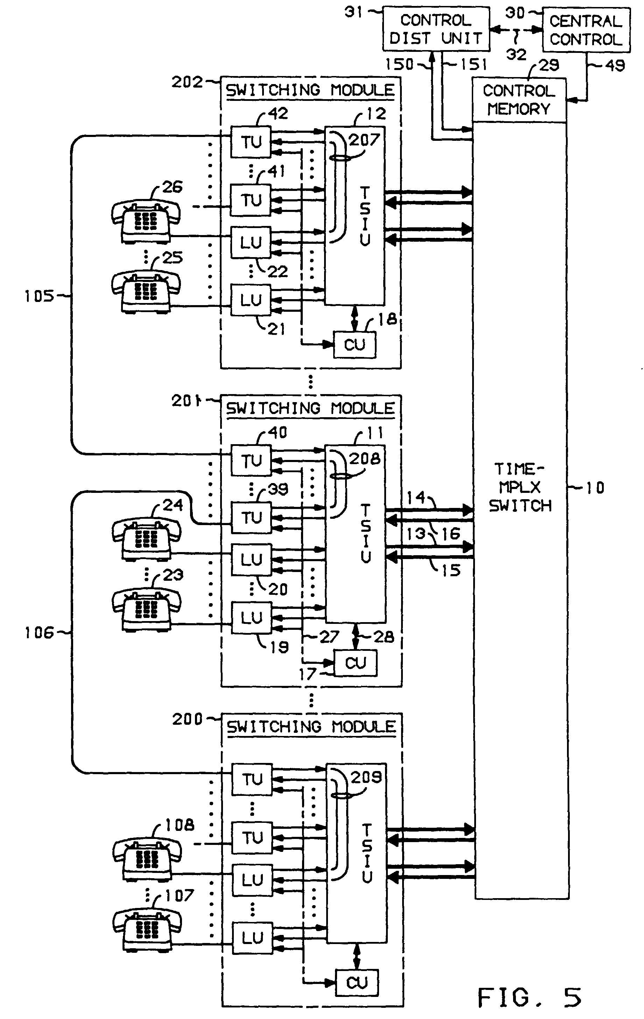

FIG. 5 shows an embodiment in which the number of interconnecting trunks is substantially reduced from $\frac{N(N-1)}{2}$. In FIG. 5, switching module 201 is used as an intermodule trunk switch and is connected to switching module 202 via a trunk 105 and to switching module 200 via trunk 106. The intermodule trunk switch provides selective trunk connection between switching modules, e. g., 200 and 202.

In the example which follows, all switching modules 200 through 202 are in the stand alone mode and subscriber set 108 of switching module 202 desires connection to subscriber set 108 of switching module 200. All of the switching modules 200 through 202 perform call processing in accordance with the flow diagram of FIG. 7. Switching module 202 detects the origination by subscriber set 26 and determines from the dialed digits that trunk 105 can be used to advance a connection toward subscriber set 108. Switching module 202 then completes a path 207 between subscriber set 26 and trunk 105 and transmits the dialed number on inter-switch module trunk 105. Switching module 201 receives the digits on trunk 105 and determines from its translation table that subscriber set 108 can be reached on trunk 106 to switching module 200. Switching module 201 then completes path 208 between trunk 105 and trunk 106 and sends the number originally dialed by subscriber set 26 on trunk 106. Switching module 200 receives the number on trunk 106 and by use of its translation table identifies subscriber set 108 as the call destination. Switching module 200 signals subscriber set 108 and completes a path 209 between subscriber set 108 and trunk 106, when the subscriber at subscriber set 108 answers. A path consisting of path 209, trunk 106, path 208, trunk 105 and path 207 exists between called subscriber 108 and calling subscriber 26.

The arrangement of FIG. 5 requires fewer inter-switching module trunks than does that of FIG. 4 to provide alternative connections between switching modules. The inter-switching module trunks, however, must receive constant service, e.g., scanning and signaling even though they are infrequently used. This tends to decrease the number of subscriber lines and/or inter-office trunks that can be serviced and thus increases the overall cost of a given sized switching system.

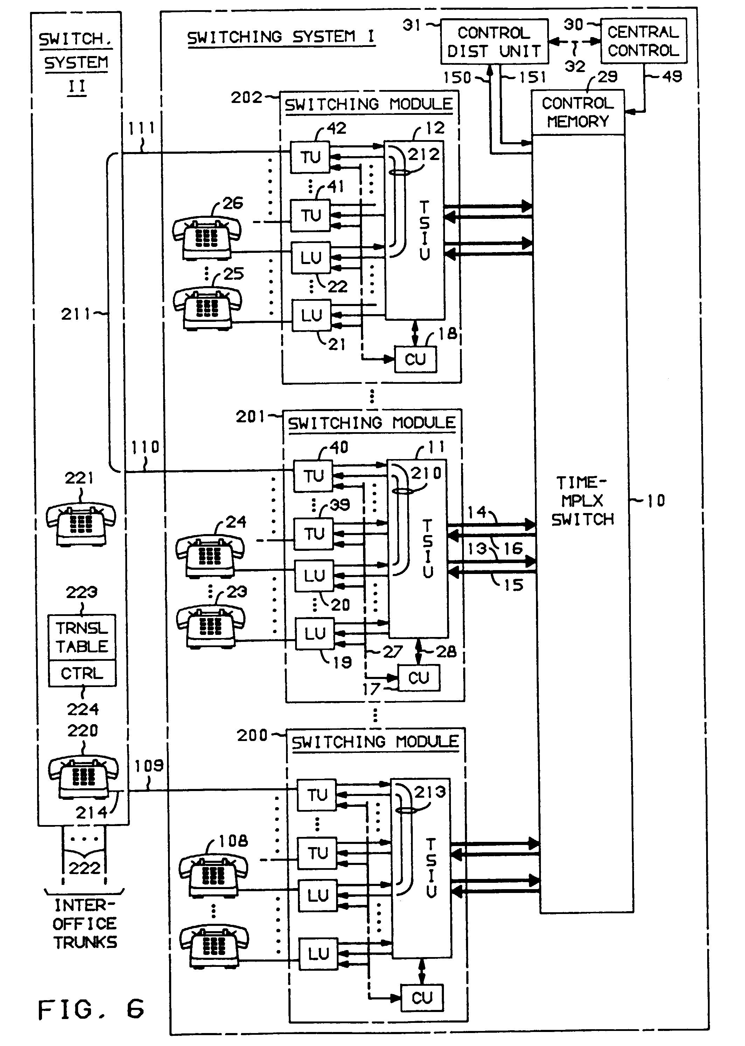

FIG. 6 represents an arrangement which uses the normal inter-switching system (end office) trunks supplied with a switching system for alternative paths between switching modules. The overhead expended to serve these trunks is normal switching system overhead when they are used for connections to other switching systems. In a time of catastrophe, the overhead expended to service these trunks to provide alternative connections between switching modules is found to be acceptable.

In FIG. 6 each of the switching modules 200 through 202 of a first switching system, switching system I, is connected by an interoffice trunk 109 through 111, respectively, to a second switching system, switching system II. Switching system II is an end office switching system which receives trunks from other switching systems and completes paths to subscribers, e.g., 220 and 221 served thereby and to trunks, e.g., 222 to other switching systems. Prior end offices comprise a translation table which includes translation information for the completion of calls to subscriber sets, e.g., 220 and 221 and to other switching offices via trunks 222. In the present embodiment, switching system II includes a translation table 223 which includes the information of the prior translation tables as well as information necessary to translate the directory numbers of the subscriber sets of switching system I. That is, translation table 223 includes information defining a trunk, e.g., 109 to the switching module of each call destination at switching system I. Switching system II responds to input stimuli to advance connections and can be, for example, the same type of system shown in FIG. 1. A controller 224 receives signaling information on an incoming trunk, e. g., 110 identifies, in response to the received signaling information, a subscriber set, e.g., 221 or trunk, e.g., 222 and connects the incoming trunk to the identified trunk or subscriber. When the controller 224 identifies a trunk, signaling information identifying the call destination is transmitted on the identified trunk.

For the following example, it is assumed that switching modules 201 and 202 are operating in the stand alone mode. Initially, subscriber set 24 goes off-hook and the directory number of subscriber set 26 is dialed. Since switching module 201 is in the stand alone mode, it translates the dialed number by consulting its memory 57 (FIG. 2) and determines that trunk 110 should be used to advance the call. Switching module 201 transmits the dialed digits on trunk 110 which is normally used to complete calls to other switching systems and completes a path 210 between subscriber set 24 and trunk 110. Controller 224 of switching system II receives the dialed digits on trunk 110 and consults translation table 223 to identify a trunk to the switching module of the call destination. Translation table 223 indicates that trunk 111 should be used and, in response, controller 224 connects trunk 110 to trunk 111 via a communication path 211 and sends the signaling information defining the call destination on trunk 111 to switching module 202. Switching module 202 receives the dialed digits and in response completes a path 212 between trunk 111 and the dialed subscriber set 26.

The arrangement of FIG. 6 is also used to complete "normal" inter-switching system calls using the same trunks as are used to provide alternative connections between switching modules. When a subscriber set 108 of switching system I dials the number of subscriber set 220 of switching system II, switching module 200 completes a path 213 between subscriber set 108 and trunk 109 to switching system II and transmits signaling information on trunk 109 identifying subscriber set 220. Controller 224 receives the call signaling information from trunk 109 and translates the received information using translation table 223. Controller 224 then controls switching system II to complete a path 214 between trunk 109 and subscriber set 220.

In the preceding examples, all of the switching modules are in the stand alone mode. It is possible that some, but less than all, of the switching modules required for connection are in stand alone mode and other switching modules still employ connection paths through the time-multiplex switch 10. When, for example, switching module 202 (FIG. 5) is in the stand alone mode and desires a connection to a subscriber 108 on switching module 200 a first path will be established to switching module 201 using the path discussed with regard to FIG. 5 consisting of path 207 and trunk 105. Switching module 201 receives the digits on trunk 105, and since it is not in the stand alone mode, completes a path to switching module 200 via the time-multiplex switch 10 in the normal mode. That is, switching module 201 communicates with central control 30 and cooperates therewith to complete a path to switching module 200 via the time-multiplex 10. Switching module 200 then finishes the path from time-multiplex switch 10 to subscriber set 108.

When a called subscriber is connected to a switching module which is in the stand alone mode and the calling switching module is not in the stand alone mode, trunk routing will be employed by the calling switching module. In this situation, the central control 30 continues to notify all switching modules of those switching modules which are in the stand alone mode so that proper routing choices are made in block 303 of FIG. 7.

The decision to use trunk routing also can be made for reasons other than stand alone operation by the switching modules. In certain situations, such as time-multiplex switch 10 capacity, it may be desirable to limit the time-multiplex switch traffic when a trunk to the called destination is available. Thus, a switching module procedure is employed which routes, for example, one of every four calls between predetermined switching modules over a trunk rather through the time-multiplex switch 10.

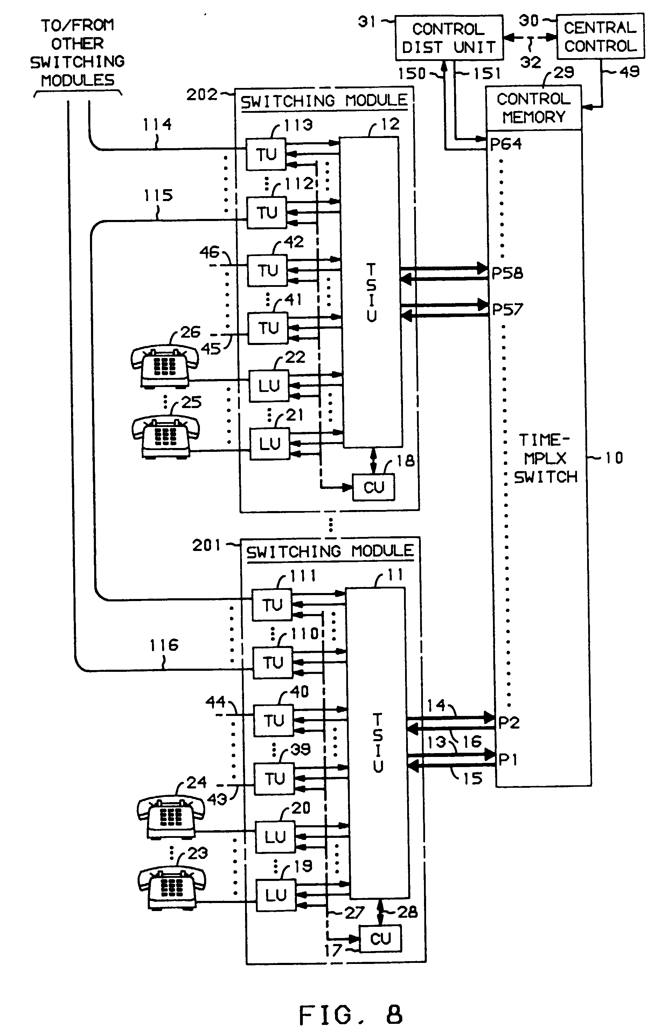

FIG. 8 represents an embodiment which is constructed to reduce the real time load on the control units, e.g., 17 serving the trunks connected to other switching modules. Two types of trunks are provided in the embodiment of FIG. 8. The first type consist of inter-office trunks represented by trunks 43 through 46 which are connected to other switching systems. The second type is comprised of trunks 114 through 116 to other switching modules of the switching system. Trunks, e.g., 115 to other switching modules of the same switching system are referred to herein as inter-switch module trunks. The inter-switch module trunks are used to advance connections between switch modules when paths through the time-multiplex 10 are not available. In normal operation, when communication paths through the time-multiplex switch 10 are available, the inter-switch module trunks are inactive and trunk services, such as scanning and signaling, are not provide to them. Trunk services are provided to the inter-office trunks, however, so that connections to other switching offices can be completed. In the following description, trunks receiving trunk services are referred to as active trunks and trunks which do not receive trunks services are referred to as inactive trunks. The use of inter-switching module trunks is discussed later herein.

During normal operation, when connection paths are available through the time-multiplex switch 10, only subscriber line 23 through 26 and trunks 43 through 46 to other switching systems are connected by multiplex unit 60 to channels in the time-slot interchange unit, e. g., 11. This allows trunk services, such as scanning and signaling, to be provided by control unit 17 to the inter-office trunks which are expected to be used, without expending control unit resources on trunks, such as inter-switch module trunks, which are not expected to be used. When events such as a time-multiplex switch 10 failure make the use of inter-switch module trunks desirable for connections the system reconfigures the connection patterns of multiplex unit 60 and demultiplex unit 61 to provide trunk services to inter-switch module trunks. The inter-switch module trunks are then used for alternative connections.

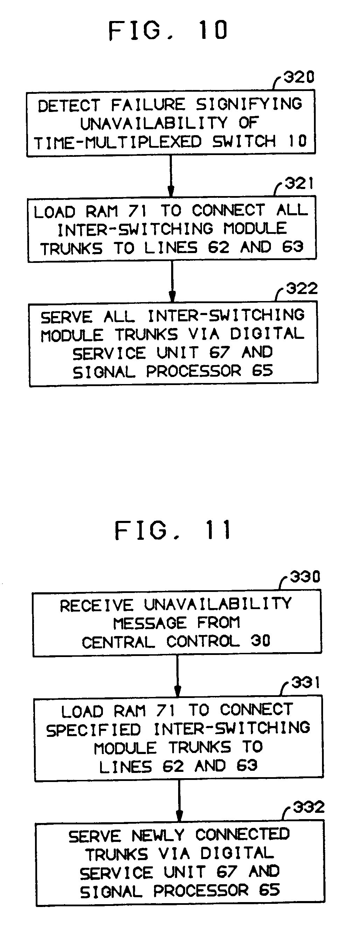

As discussed above, control messages between control units, e.g., 17 and 18 and the central control 30 are used to detect the unavailability of time-multiplex switch 10 for connections between switching modules. When unavailability is detected by a switching module, that switching module reconfigures itself to provide trunk services to the attached inter-switch module trunks. FIG. 10 is a flow diagram of the reconfiguration method used by a switching module which detects that it cannot use the time-multiplex switch 10 to advance connections. First the unavailability of the time-multiplex 10 is detected in block 320 by the failure to receive control messages from the central control 30 as above discussed. This results in the stand alone mode by the detecting switching module where trunk services are provided to all of the inter-switch module trunks, e.g., 115. After the performance of block 320 a switching module proceeds to block 321 where information identifying the available inter-switch module trunks is read from memory 57 and written into RAM 71 to define the connections of inter-switching module trunks to channels on time-multiplex lines 62 and 63. The digital services unit 67 and the signal processor 65 are then used by processor 66 to provide trunk services to the inter-switch module trunks in block 322.

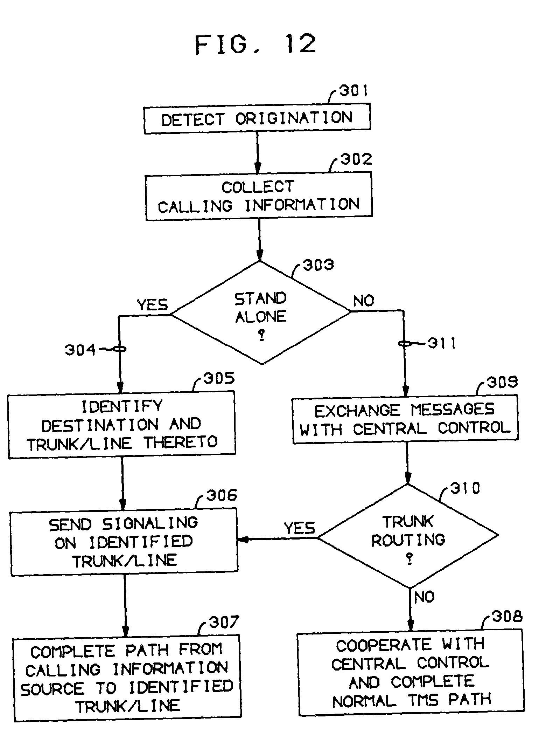

As previously discussed when central control 30 detects that a switching module cannot be accessed via the time-multiplex switch 10 control messages are sent to the other switching modules notifying them of the unavailability of the time-multiplex 10 for connection to the inaccessible switching module. The central control 30 includes in its data base information identifying the inter-switching module trunks between all switching modules. When the central control 30 detects an inaccessible switching module it transmits a message to each other switching module indicating the unavailability and identifying inter-switch module trunks between the inaccessible switching module and the switching module receiving the message. This message is received by a switching module in block 330 (FIG. 11). The receiving switching module responds to the unavailability message by loading RAM 71 with information to connect (block 331) each inter-switch module trunk identified by the message from central control 30 to the time-multiplex lines 62 and 63. The newly connected trunks are then served (block 332) as discussed above. In the present embodiment trunk services are provided to any trunk (either inter-switch module or inter-office) connected to a channel on time-multiplex lines 62 and 63. Connection of a trunk to channels on time-multiplex lines 62 and 63 also enables the switching of information to and from that trunk by the time-slot interchange unit, e.g., 11.

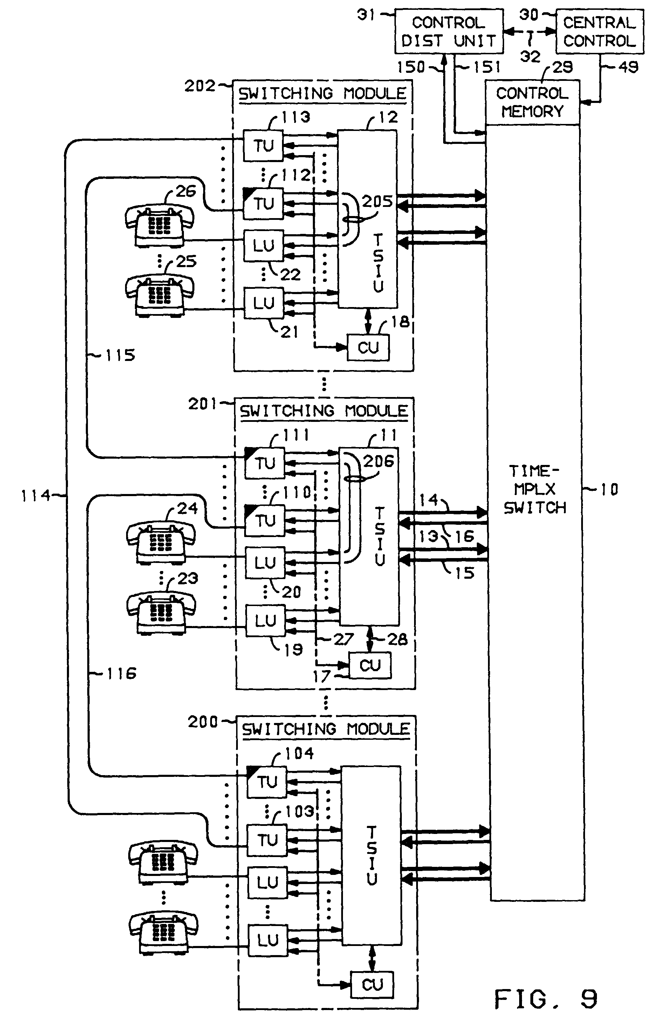

FIG. 9 represents a time division switching system of the type disclosed in FIG. 1 and components having the same reference numeral as like components in FIG. 1 are the same. The system shown in FIG. 9 comprises three representative switch modules 200 through 202. These switch modules are interconnected by bi-directional inter-switch module trunks 114, 115 and 116. Trunk 114 connects trunk unit 113 of switch module 202 to trunk unit 103 of switch module 200, trunk 115 connects trunk unit 112 of switch module 202 to trunk unit 111 of switch module 201 and trunk 116 connects trunk unit 110 of switch module 201 to trunk unit 104 of switch module 200.

In FIG. 9 only the inter-switching module trunks 114 through 116 and their associated trunk units are shown. Initially, time-multiplex switch 10 is available for connections between all switching modules and all the trunks 114 through 116 are inactive. That is, they are not connected to time-multiplex lines 62 and 63 (FIG. 2) of any time-slot interchange unit 11 and accordingly they receive no trunk services. The control unit of each switching module 200 through 202 periodically transmits messages to central control 30 in order to determine continuing time-multiplex switch 10 of availability. The central control 30 responds to each received message so that the switching modules know of the continued availability.

Assume that a complete failure of time-multiplex lines 13 through 16 connecting switching modules 201 to time-multiplex switch 10 occurs. In this event, central control 30 no longer receives messages from switching module 201 and switching module 201 no longer receives response messages from central control 30. Control unit 17 of switching module 201 detects the absence of messages from central control 30 and performs the previously described sequence of FIG. 5 to make all of the its inter-switching module trunks active by connecting them to time-multiplex lines 62 and 63 of time-slot interchange unit 11. Thus, trunk services are provided to trunks 115 and 116 at switching module 201.

Central control 30 detects the absence of messages from switching module 201 and determines that switching module 201 cannot communicate through the time-multiplex switch 10, that is, it is in the stand alone mode. Central control 30 then searches its memory to determine which inter-switch module trunks, e.g., 114 though 116 can be used to communicate between switching module 201 and the other switching modules 200 and 202 of the system. Trunk 115 to switching module 202 and trunk 116 to switching module 200 are found in this search. Unavailability messages are then transmitted by central control 30 to switching module 202 identifying trunk 115 and to switching module 200 identifying trunk 116. In response switching modules 200 and 202 follow the procedures described with regard FIG. 11 to provide trunk services to trunk 116 and 115, respectively. In FIG. 9 the trunk units 104, 110, 111, and 112 which are connected to newly activated trunks 115 and 116 include a darkened triangle in the upper left corner to represent that they are receiving trunk service.

FIG. 12 is a flow diagram of the procedures performed in the embodiment of FIG. 9 by all switching modules, e.g., 202 in the completion of connections. The switching system of FIG. 9 operates in accordance with the call processing routine of FIG. 12 which is described in terms of exemplary call from subscriber set 26 of switching module 202 to subscriber set 24 of switching module 201.

Control unit 18 (block 301, FIG. 12), by means described with regard to FIGS. 1 through 3, detects when subscriber set 26 goes off-hook and begins to collect the dialed digits. In accordance with the present example, the dialed digits define subscriber set 24 of switch module 201. When all digits are collected (block 302) the call processing routine proceeds to block 312 where the switching module status is checked and a decision is made to use normal time-multiplex switch routing or the alternative inter-switch module trunk routing. The status information stored in memory 57 (FIG. 2) is read to make this decision. When, as in the present example, a switching module, e.g., 202 is not in the stand alone mode the routing process continues from block 312 via path 311 to block 309. In block 309 control unit 18 transmits a control message identifying the called number at switching module 201 to central control 30. Since, in the present example, switching module 201 is unavailable via the time-multiplex switch 10 central control 30 returns a message to control unit 18 identifying that newly activated inter-switch module trunk 115 is to be used to complete the call. In response to the message from central control 30 control unit 18 recognizes in block 310 that inter-switch module trunk 115 is to be used to complete the call and proceeds to block 306 (had a time-multiplex switch 10 connection been available, the switching module 202 would have proceeded to block 308 where a specified time-multiplex switch 10 path would have been used). In block 306 control unit 18 seizes trunk 115 which is presently receiving scanning and signaling trunk services from switch module 202 and proceeds to send representations of the dialed digits on trunk 115 in response to the appropriate acknowledgement signals from switching module 201. Switching module 202 finally completes path 205 between subscriber set 26 and trunk 115 (block 307). The completed path consists of receive time-slot interchange 50, gates 8 and 9 and transmit time-slot interchange 53 as previously discussed.

With some overlap of operation with switch module 202, switch module 201 starts a call processing program as shown in FIG. 12 in response to the seizure of trunk 115 by switching module 202. Switching module 201 completes the origination with acknowledgement signals (block 301) and collects the digits from trunk 115 in block 302. The call processing routine in switching module 201 determines from the status information in its memory 57 (FIG. 2) that it is in the stand alone mode (block 312) and proceeds via path 304 to block 305. Control unit 17 consults its translation table (block 305) using the digits received from trunk 115 and determines that they represent subscriber set 24. Switching module 201 then signals subscriber set 24 (block 306) and completes the path 206 between line unit 20 and trunk 115 (block 307) upon answer at subscriber set 24. Subscriber set 24 is then connected to subscriber set 26 via the path provided by path 205 through time slot interchange unit 12, the trunk 115 and the path 206 through time-slot interchange unit 11. This path is an alternative to the unavailable (in the present example) path through time-multiplex switch 10.

## Claims

1. A telecommunications switching system for advancing call connections comprising:

   a plurality of switch units (200, 201, 202), each comprising a plurality of line appearances and a plurality of trunk appearances, for selectively connecting said appearances to a central connection means (10);

   said central connection means (10) connected to said plurality of switch units and cooperative with said switch units for selectively interconnecting said switch units to advance call connections between ones of said appearances on different ones of said switch units; and

   an alternative arrangement (205, 206), operative when said central connection means (10) is unavailable to connect said first switch unit (201) to said second switch unit (202), for connecting a first one (24) of said line appearances on a first one of said switch units (201) to a second one (26) of said line appearances on a second one of said switch units (202),

said alternative arrangement CHARACTERIZED BY:

   control means (17, 11, 40), within said first switch unit (201), for advancing a call connection from said first line appearance (24) to a predetermined one of said trunk appearances on said first switch unit (201);

   means (100) for connecting said predetermined one trunk appearance on said first switch unit (201) to a predetermined one of said trunk appearances (TU 42) on said second switch unit (202); and

   said control means comprising:

   means (17) for receiving from said first line appearance (24) on said first switch unit (201), call signaling information defining said second line appearance (26) and;

   means (17, 11, 40), responsive to said call signaling information, for transmitting on said connecting means (100), trunk signaling information defining said second appearance (26), and advancing said call connection to said second switch unit (202);

   whereby said second switch unit (202), upon receipt of said call connection advanced via said connecting means (100), can process said call connection as a trunk input.

2. The system of claim 1 wherein said connecting means comprises an intermediate switch means (105, 106) providing selective intermodule trunk connection, having at least two additional trunk appearances, for interconnecting said two additional trunk appearances;

   and means for connecting each of said predetermined trunk appearances on said first and second switch units to one of said two additional trunk appearances.

3. The system of claim 2 wherein said intermediate switch means comprises a third one (200) of said plurality of switch units.

4. The system of claim 4 wherein said intermediate switch means comprises an additional telecommunication switching system, having a second plurality of switch units, and being connected via trunk appearances on at least one of its switch units to said predetermined one trunk appearance on said first switch unit by a first trunk and to said predetermined one trunk appearance on said second switch unit by a second trunk, said additional telecommunication switching system being responsive to trunk signaling information for connecting said first and second trunks.

5. The system of claim 1 wherein said second switch unit further comprises means, responsive to said trunk signaling information received on said predetermined trunk appearance on said second switch unit via said connecting means, for connecting said second line appearance to said connecting means.

6. The system of claim 1 further comprising:

> means for detecting the unavailability of said central connection means (10) for advancing connections between said first and said second switch units; and
> means responsive to said detecting means for providing trunk services at said predetermined one trunk appearance on said first switch unit and at said predetermined one trunk appearance on said second switch unit following detection of said central connection means (10) being unavailable to connect said first switch unit and said second switch unit.

## Patentansprüche

1. Fernmeldevermittlungsanlage zum Fortschalten von Rufverbindungen, mit folgendem:

> mehreren Vermittlungseinheiten (200, 201, 202), die jeweils mehrere auftretende Anschlüsse und mehrere auftretende Leitungen umfassen, um die auftretenden Anschlüsse und Leitungen selektiv mit einem zentralen Verbindungsmittel (10) zu verbinden;
> dem zentralen Verbindungsmittel (10), das mit den mehreren Vermittlungseinheiten verbunden ist und mit den Vermittlungseinheiten zusammenwirkt, um die Vermittlungseinheiten zum Fortschalten von Rufverbindungen zwischen einzelnen der auftretenden Leitungen an verschiedenen der Vermittlungseinheiten selektiv zusammenzuschalten; und
> einer alternativen Anordnung (205, 206), die bei Nichtverfügbarkeit des zentralen Verbindungsmittels (10), um die erste Vermittlungseinheit (201) mit der zweiten Vermittlungseinheit (202) zu verbinden, dahingehend wirkt, einen ersten (24) der auftretenden Anschlüsse an einer ersten der Vermittlungseinheiten (201) mit einem zweiten (26) der auftretenden Anschlüsse an einer zweiten der Vermittlungseinheiten (202) zu verbinden,
> wobei die alternative Anordnung gekennzeichnet ist durch:
> Steuermittel (17, 11, 40) in der ersten Vermittlungseinheit (201) zum Fortschalten einer Rufverbindung von dem ersten auftretenden Anschluß (24) zu einer vorbestimmten der auftretenden Leitungen an der ersten Vermittlungseinheit (201);
ein Mittel (100) zum Verbinden der vorbestimmten einen auftretenden Leitung an der ersten Vermittlungseinheit (201) mit einer vorbestimmten der auftretenden Leitungen (TU 42) an der zweiten Vermittlungseinheit (202); und
wobei die Steuermittel folgendes umfassen:
ein Mittel (17) zum Empfangen von Rufsignalisierungsinformationen, die den zweiten auftretenden Anschluß (26) definieren, von dem ersten auftretenden Anschluß (24) an der ersten Vermittlungseinheit (24); und
auf die Rufsignalisierungsinformationen reagierende Mittel (17, 11, 40) zum Senden von den zweiten auftretenden Anschluß (26) definierenden Leitungssignalisierungsinformationen auf dem Verbindungsmittel (100) und zum Fortschalten der Rufverbindung zu der zweiten Vermittlungseinheit (202) bei,
wodurch die zweite Vermittlungseinheit (202) bei Empfang der über das Verbindungsmittel (100) fortgeschalteten Rufverbindung die Rufverbindung als Leitungseingang bearbeiten kann.

2. Anlage nach Anspruch 1, wobei das Verbindungsmittel ein eine selektive Modulquerverbindung bereitstellendes zwischengeschaltetes Vermittlungsmittel (105, 106) mit mindestens zwei zusätzlichen auftretenden Leitungen zum Zusammenschalten der zwei zusätzlichen auftretenden Leitungen

> und Mittel zum Verbinden jeder der vorbestimmten auftretenden Leitungen an der ersten und der zweiten Vermittlungseinheit mit einer der zwei zusätzlich auftretenden Leitungen umfaßt.

3. Anlage nach Anspruch 2, wobei das zwischengeschaltete Vermittlungsmittel eine dritte (200) der mehreren Vermittlungseinheiten umfaßt.

4. Anlage nach Anspruch 4, wobei das zwischengeschaltete Vermittlungsmittel eine zusätzliche Fernmeldevermittlungsanlage mit zweiten mehreren Vermittlungseinheiten umfaßt und über auftretende Leitungen an mindestens einer ihrer Vermittlungseinheiten durch eine erste Leitung mit der vorbestimmten einen auftretenden Leitung an der ersten Vermittlungseinheit und durch eine zweite Leitung mit der vorbestimmten einen auftretenden Leitung an der zweiten Vermittlungseinheit verbunden ist, wobei die zusätzliche Fernmeldevermittlungsanlage auf Leitungssignalisierungsinformationen zum Verbinden der ersten und zweiten Leitung reagiert.

5. Anlage nach Anspruch 1, wobei die zweite Vermittlungseinheit weiterhin auf die an der vorbestimmten auftretenden Leitung an der zweiten Vermittlungseinheit über das Verbindungsmittel empfangene Leitungssignalisierungsinformationen reagierende Mittel zum Verbinden der zweiten auftretenden Leitung mit dem Verbindungsmittel umfaßt.

6. Anlage nach Anspruch 1, die weiterhin umfaßt:

ein Mittel zum Erfassen der Nichtverfügbarkeit des zentralen Verbindungsmittels (10) zum Fortschalten von Verbindungen zwischen der ersten und der zweiten Vermittlungseinheit; und
ein auf das Erfassungsmittel reagierendes Mittel zum Bereitstellen von Leitungsdiensten an der vorbestimmten einen auftretenden Leitung an der ersten Vermittlungseinheit und an der vorbestimmten einen auftretenden Leitung an der zweiten Vermittlungseinheit nach der Erfassung der Nichtverfügbarkeit des zentralen Verbindungsmittels (10) zum Verbinden der ersten Vermittlungseinheit und der zweiten Vermittlungseinheit.

## Revendications

1. Système de commutation de télécommunications pour établir les connections d'appel comprenant :

une pluralité d'unités de commutation (200, 201, 202), comprenant chacune une pluralité d'entrées de ligne et une pluralité d'entrées de liaison principale, pour connecter de manière sélective lesdites entrées à des moyens de connexion centrale (10) ;
lesdits moyens de connexion centrale (10) étant connectés à ladite pluralité d'unités de commutation et coopérant avec lesdites unités de commutation pour interconnecter sélectivement lesdites unités de commutation pour établir les connexions d'appel entre les unes desdites entrées et différentes autres desdites unités de commutation ; et
une disposition alternative (205, 206), active lorsque lesdits moyens de connexion centrale (10) sont indisponibles pour connecter ladite première unité de commutation (201) à ladite seconde unité de commutation (202), pour connecter une première (24) desdites entrées de ligne d'une première desdites unités de commutation (201), à une seconde (26) desdites entrées de ligne d'une seconde desdites unités de commutation (202),
ladite disposition alternative étant CARACTÉRISÉE PAR :
des moyens de contrôle (17, 11, 40), au sein de ladite première unité de commutation (201), pour établir une connexion d'appel de ladite première entrée de ligne (24) vers l'une desdites entrées de liaison principale prédéterminée de ladite première unité de commutation (201) ;
des moyens (100) pour connecter ladite une entrée de liaison principale prédéterminée de ladite première unité de commutation (201) à l'une desdites entrées de liaison principale prédéterminée (TU 42) de ladite seconde unité de commutation (202) ; et
lesdits moyens de contrôle comprenant :
des moyens (17) pour recevoir de ladite première entrée de ligne (24) de ladite première unité de commutation (201), des informations de signalisation d'appel définissant ladite seconde entrée de ligne (26) et ;
des moyens (17, 11, 40), sensibles auxdites informations de signalisation d'appel, pour transmettre sur lesdits moyens de connexion (100), des informations de signalisation de liaison principale définissant ladite seconde entrée (26), et établissant ladite connexion d'appel vers ladite seconde unité de commutation (202),
par lesquels ladite seconde unité de commutation (202), après réception de ladite connexion d'appel établie via lesdits moyens de connexion (100), peut traiter ladite connexion d'appel comme une entrée de liaison principale.

2. Système selon la revendication 1 dans lequel lesdits moyens de connexion comprennent des moyens de commutation intermédiaire (105, 106) fournissant une connexion de liaison principale sélective entre les modules, ayant au moins deux entrées additionnelles de liaison principale, pour interconnecter lesdites deux entrées additionnelles de liaison principale ;
et des moyens pour connecter chacune desdites entrées de liaison principale prédéterminées desdites première et seconde unités de commutation à l'une desdites deux entrées additionnelles de liaison principale.

3. Système selon la revendication 2 dans lequel lesdits moyens de commutation intermédiaire comprennent une troisième unité (200) de ladite pluralité d'unités de commutation.

4. Système selon la revendication 3 dans lequel lesdits moyens de commutation intermédiaire comprennent un système de commutation de télécommunication additionnel ayant une seconde pluralité d'unités de commutation, et étant connecté via des entrées de liaisons principales d'au moins l'une de ses unités de commutation à ladite une entrée de liaison principale prédéterminée de ladite première unité de commutation par une première liaison principale et à ladite une entrée de liaison principale prédéterminée de ladite seconde unité de commutation par une seconde liaison principale, ledit système de commutation de télécommunication additionnel étant sensible à des informations de signalisation de liaison principale pour connecter lesdites première et seconde liaisons principales.

5. Système selon la revendication 1 dans lequel ladite seconde unité de commutation comprend de plus des moyens sensibles auxdites informations de signalisation de liaison principale reçues sur ladite entrée de liaison principale prédéterminée de ladite seconde unité de commutation via lesdits moyens de connexion, pour connecter ladite seconde entrée de ligne auxdits moyens de connexion.

6. Système selon la revendication 1 comprenant de plus :

des moyens pour détecter l'indisponibilité desdits moyens de connexion centrale (10) pour établir les connexions entre lesdites première et seconde unités de commutation ; et
des moyens sensibles auxdits moyens de détection pour fournir des services de liaison principale sur ladite une entrée de liaison principale prédéterminée de ladite première unité de commutation et sur ladite une entrée de liaison principale prédéterminée de ladite seconde unité de commutation suite à la détection desdits moyens de connexion centrale (10) indisponibles pour connecter ladite première unité de commutation et ladite seconde unité de commutation.

FIG. 1

FIG. 2

TIME SLOT INTERCHANGE UNIT

TO/FROM TMS 10

TO/FROM TRUNK UNIT 40

TO/FROM LINE UNIT 19

TO/FROM TRUNK & LINE UNITS 27

TIME SLOT COUNTER 54

INTERFACE UNIT

CLK

E-BIT ACCUM 48

E-BIT CHK CKT 194

DMA 58

MEM 57

PROCESSOR 66

RTSI 50

CONTROL RAM 55

TTSI 53

E-BIT

SP 65

DIGITAL SVC UNIT 67

CI 56

MPX 60

RAM 71

DE-MPX 61

CONTROL UNIT 17

17

# FIG. 3

## 16-BIT DATA WORD

| PCM 0 | PCM 1 | PCM 2 | PCM 3 | PCM 4 | PCM 5 | PCM 6 | PCM 7 | A | B | C | D | E | F | G | P |
|---|---|---|---|---|---|---|---|---|---|---|---|---|---|---|---|

DATA PORTION        SIGNALING PORTION      PARITY

EP 0 399 723 B1

FIG. 4

FIG. 5

FIG. 6

# FIG. 7

```
                        ┌─301
            ┌─────────────────────────┐
            │   DETECT  ORIGINATION   │
            └─────────────────────────┘
                        │
                        ▼        ┌─302
            ┌─────────────────────────┐
            │        COLLECT          │
            │   CALLING  INFORMATION  │
            └─────────────────────────┘
                        │
                        ▼      ┌─303
                      ╱────╲                              ┌─308
                    ╱ TRUNK  ╲        NO       ┌──────────────────────────┐
                  ╱  ROUTING   ╲───────────────▶│     COOPERATE  WITH      │
                    ╲    ?    ╱                 │  CENTRAL  CONTROL         │
                      ╲────╱                    │     AND  COMPLETE         │
                        │                       │  NORMAL  TMS  PATH        │
                        │ YES                   └──────────────────────────┘
            304 ─○
                        ▼      ┌─305
            ┌─────────────────────────┐
            │       IDENTIFY          │
            │  DESTINATION  AND        │
            │  TRUNK/LINE  THERETO     │
            └─────────────────────────┘
                        │
                        ▼      ┌─306
            ┌─────────────────────────┐
            │    SEND  SIGNALING       │
            │    ON  IDENTIFIED        │
            │       TRUNK/LINE         │
            └─────────────────────────┘
                        │
                        ▼      ┌─307
            ┌─────────────────────────┐
            │  COMPLETE  PATH  FROM    │
            │  CALLING  INFORMATION    │
            │  SOURCE  TO  IDENTIFIED  │
            │       TRUNK/LINE         │
            └─────────────────────────┘
```

EP 0 399 723 B1

FIG. 8

23

FIG. 9

# FIG. 10

DETECT FAILURE SIGNIFYING
UNAVAILABILITY OF
TIME-MULTIPLEXED SWITCH 10 ⌐320

LOAD RAM 71 TO CONNECT ALL
INTER-SWITCHING MODULE
TRUNKS TO LINES 62 AND 63 ⌐321

SERVE ALL INTER-SWITCHING
MODULE TRUNKS VIA DIGITAL
SERVICE UNIT 67 AND
SIGNAL PROCESSOR 65 ⌐322

# FIG. 11

RECEIVE UNAVAILABILITY
MESSAGE FROM
CENTRAL CONTROL 30 ⌐330

LOAD RAM 71 TO CONNECT
SPECIFIED INTER-SWITCHING
MODULE TRUNKS TO
LINES 62 AND 63 ⌐331

SERVE NEWLY CONNECTED
TRUNKS VIA DIGITAL
SERVICE UNIT 67 AND
SIGNAL PROCESSOR 65 ⌐332

# FIG. 12

```
                    ┌─────────────────────┐ ⌐301
                    │ DETECT ORIGINATION  │
                    └─────────────────────┘
                              │
                              ▼
                    ┌─────────────────────┐ ⌐302
                    │      COLLECT        │
                    │ CALLING INFORMATION │
                    └─────────────────────┘
                              │
                              ▼
                         ⌐303
              YES      ◇ STAND ◇      NO
         ┌──────────────│ ALONE │──────────────┐
         │              │   ?   │               │
    304~⊕ │              ◇───────◇          ⊕~311 │
         │                                      │
         ▼                                      ▼
┌─────────────────────┐ ⌐305      ┌─────────────────────┐ ⌐309
│     IDENTIFY        │           │ EXCHANGE MESSAGES   │
│  DESTINATION AND    │           │ WITH CENTRAL CONTROL│
│ TRUNK/LINE THERETO  │           └─────────────────────┘
└─────────────────────┘                      │
         │                                    ▼
         ▼                               ⌐310
┌─────────────────────┐ ⌐306    YES  ◇ TRUNK ◇
│   SEND SIGNALING    │ ◄───────────│ ROUTING │
│   ON IDENTIFIED     │              │    ?    │
│     TRUNK/LINE      │              ◇─────────◇
└─────────────────────┘                   │ NO
         │                                 ▼
         ▼                      ┌─────────────────────┐ ⌐308
┌─────────────────────┐ ⌐307   │   COOPERATE WITH    │
│ COMPLETE PATH FROM  │        │  CENTRAL CONTROL    │
│ CALLING INFORMATION │        │   AND COMPLETE      │
│ SOURCE TO IDENTIFIED│        │  NORMAL TMS PATH    │
│     TRUNK/LINE      │        └─────────────────────┘
└─────────────────────┘
```